# DEMANDE DE BREVET EUROPEEN

(11) **EP 1 167 788 A1**
(43) Date de publication de la demande: **02.01.2002**
(21) Numéro de dépôt: 00870148.4
(22) Date de dépôt: 30.06.2000
(51) Int. Cl.: F16C 27/04

(54) **Dispositif d'étanchéité d'un "squeeze film" intégré dans un palier à roulement**

(71) Demandeur: Techspace Aero S.A., 4041 Herstal (BE)
(72) Inventeur: Bos, Mathieu, 3520 Zonhoven (BE); Ryhon, Sébastien, 4140 Sprimont (BE)
(74) Mandataire: Van Malderen, Joelle

(57) **Abrégé**

La présente invention se rapporte à un palier à roulement pour le maintien d'une structure mobile interne (2) à symétrie de révolution, en rotation à l'intérieur d'une structure externe (1), elle-même fixe ou mobile, ledit palier à roulement comprenant un ensemble de billes (3) et au moins une bague externe de roulement (4) assurant le contact mécanique entre lesdites billes (3) et ladite structure externe (1), ledit palier à roulement comprenant en outre un amortisseur à huile sous pression appelé "squeeze film", disposé au niveau de la surface annulaire de contact (5) entre ladite bague (4) et la structure externe (1), ledit palier à roulement comprenant au moins deux joints d'étanchéité élastiques annulaires (9,9',19,19'), disposés chacun dans une gorge (6,6'), aux bords de ladite surface annulaire (5), caractérisé en ce que l'étanchéité dudit joint (9,9',19,19') est assurée par le contact entre le joint et deux surfaces parallèles (S1',S2') de ladite gorge, les forces de pression du joint sur les surfaces des gorges étant axiales.

## Description

### Objet de l'invention

La présente invention se rapporte à un dispositif d'étanchéité pour "squeeze film" ou amortisseur à huile sous pression intégré dans un palier à roulement.

L'invention concerne également le palier à roulement mettant en oeuvre le dispositif d'étanchéité.

### Arrière-plan technologique et état de la technique

Un palier à roulement, tel que par exemple dans un moteur d'avion, sert de lien entre un ou plusieurs éléments mobiles internes, de préférence à symétrie de révolution et tournant autour d'un axe, et une structure externe. La structure externe peut être elle-même soit fixe soit mobile. Cette structure possède également la symétrie de révolution par rapport à l'axe de rotation de l' (les) élément(s) mobile(s). Elle peut par exemple avoir la forme d'un cône.

Le palier à roulement est essentiellement constitué de billes ou de rouleaux se déplaçant sur des voies de roulement solidaires ou réalisées par des bagues, de préférence une bague interne et une bague externe.

En fonctionnement, des efforts sont transmis de l'élément mobile vers la structure externe, en particulier par l'intermédiaire de la bague externe de roulement, qui est directement en contact avec la structure externe.

Afin d'amortir l'effet de ces efforts, il est connu de confiner un film d'huile entre la bague externe de roulement, qui travaille en frottement, et la pièce de structure externe. Ce film d'huile est communément appelé « squeeze film ».

L'huile présente à la surface de contact bague - structure externe est une huile sous pression, qui joue le rôle d'amortisseur.

La plupart des « squeeze films » connus sont étanchés au moyen de joints se présentant sous la forme de segments de type « piston ». Ces joints sont placés dans deux gorges annulaires usinées dans la bague à sa surface de contact avec la structure externe. Le film d'huile est dès lors plus particulièrement confiné dans l'espace délimité par ces deux gorges annulaires.

Le problème principal réside dans l'étanchéité d'un tel dispositif.

Le document US-A-4 175 803, en particulier, décrit la technique du "squeeze film" constituant un amortisseur à huile sous pression, utilisé particulièrement dans les moteurs de type turbine à gaz.

Dans ces moteurs, on utilise deux paliers à roulement pour maintenir dans une structure fixe, à ses extrémités, l'arbre portant les aubes du compresseur et de la turbine basse pression.

De même, on utilise deux autres paliers à roulement pour maintenir en rotation autour de l'arbre précité, l'arbre portant les aubes du compresseur et de la turbine haute pression. Les paliers s'appuient l'un sur l'arbre précité, l'autre sur la structure fixe.

Ces quatre paliers à roulement sont des exemples du domaine d'application de la présente invention.

Les paliers sont soumis à des vibrations entraînées par certains déséquilibres. Lors de ces vibrations, le film hydraulique d'amortissement (appelé "squeeze film" en anglais) est "écrasé" en un point de l'espace annulaire qui existe entre la bague externe du roulement et la structure externe qui entoure cette bague.

Les vibrations entraînent ce "point d'écrasement" en un mouvement orbital (de précession) le long de l'espace annulaire.

La présence d'huile maintenue sous pression dans l'espace annulaire, grâce au mouvement orbital, a pour effet de créer un amortissement de la vibration.

En vue de réaliser un amortissement suffisant et stable, il est souhaitable de maintenir le "squeeze film" par un dispositif d'étanchéité.

La plupart des "squeeze films" proposés comportent des joints d'étanchéité du même type que les segments de piston des moteurs automobiles et ils agissent en partie au moins par une pression radiale, comme par exemple dans le document FR-A-2 517 772.

Ce type de joint présente divers inconvénients. Les joints dynamiques de type segment de piston doivent être usinés avec une grande précision. Ils sont donc chers. De plus, leur montage est délicat. Enfin, ils présentent une fuite d'huile non calibrée et donc un amortissement pas toujours parfaitement maîtrisé.

### Buts de l'invention

La présente invention vise à fournir une solution pour l'étanchement des « squeeze films » qui ne présente pas les inconvénients de l'état de la technique.

La présente invention vise plus particulièrement à réaliser une excellente étanchéité tout en disposant d'une bonne reproductibilité. En effet, la fuite d'huile peut ainsi être calibrée.

La présente invention vise encore à permettre l'utilisation de joints d'étanchéité d'un coût modéré, en particulier de joints quasi standards et essentiellement disponibles dans le commerce.

En particulier, la présente invention vise à proposer une solution avantageuse pour des paliers à roulement, avec ou sans butée, utilisés dans les moteurs aéronautiques civils.

### Principaux éléments caractéristiques de l'invention

La présente invention concerne un palier à roulement pour le maintien d'une structure mobile interne à symétrie de révolution, en rotation à l'intérieur d'une structure externe, elle-même fixe ou mobile, ledit palier à roulement comprenant un ensemble de billes et au moins une bague externe de roulement assurant le contact mécanique entre lesdites billes et ladite structure externe, ledit palier à roulement comprenant en outre un amortisseur à huile sous pression appelé "squeeze film", disposé au niveau de la surface annulaire de contact entre ladite bague et la structure externe, ledit palier à roulement comprenant au moins deux joints d'étanchéité élastiques annulaires, caractérisé en ce que disposés chacun dans une gorge, aux bords de ladite surface annulaire, l'étanchéité dudit joint est assurée par le contact entre le joint et deux surfaces parallèles de ladite gorge, les forces de pression du joint sur les surfaces des gorges étant axiales.

Ce dispositif permet d'assurer l'étanchéité du « squeeze film » au niveau du joint, essentiellement le long de sa surface de contact.

Avantageusement, le joint d'étanchéité élastique et annulaire est un joint à lèvres en forme de "U" ou encore un joint métallique de type E dont le(s) creux est (sont) dirigé(s) vers le "squeeze film", de sorte que la pression d'huile entraîne une pression axiale sur les ailes du joint agissant pour favoriser l'étanchéité.

De préférence, le joint à lèvres en forme de "U" est un joint polymère, par exemple en polyimide, comportant un élément de ressort à l'intérieur du "U".

De plus, selon la configuration mise en oeuvre, le diamètre extérieur d'un des deux joints annulaires est au plus égal au diamètre intérieur de l'autre joint annulaire.

Avantageusement, le dispositif de l'invention peut comprendre au moins un joint à lèvres et au moins un joint de type "E".

Selon une forme d'exécution préférée, les deux gorges sont disposées de manière asymétrique de part et d'autre de ladite surface annulaire, une des surfaces de contact d'étanchéité avec ledit joint appartenant à la pièce de structure externe et l'autre surface de contact d'étanchéité avec ledit joint appartenant à la bague.

Selon une modalité particulièrement avantageuse de la présente invention, la bague externe de roulement présente un premier épaulement annulaire, la pièce de structure présente un second épaulement annulaire, la mise en contact des deux pièces assurant de manière coopérative la formation de la gorge dans laquelle est disposé et comprimé le joint annulaire.

L'invention concerne également une bague externe de roulement d'un palier à roulement pour le maintien d'une structure mobile interne à symétrie de révolution, en rotation à l'intérieur d'une structure externe, elle-même fixe ou mobile, ledit palier à roulement comprenant un ensemble de billes, ladite bague externe assurant le contact mécanique entre lesdites billes et ladite structure externe, ledit palier à roulement comprenant en outre un amortisseur à huile sous pression appelé "squeeze film", disposé au niveau de la surface annulaire de contact entre ladite bague et la structure externe ; caractérisée en ce qu'elle comporte au moins deux premiers épaulements annulaires qui coopèrent avec deux seconds épaulements annulaires usinés dans la pièce de structure, lors de la mise en contact des deux pièces, pour former au moins deux gorges, disposées aux bords de la surface annulaire de contact entre la bague et la pièce de structure, de manière asymétrique de part et d'autre de ladite surface, chaque gorge résultant de la mise en vis-à-vis d'un premier et d'un second épaulement, au moins deux joints d'étanchéité élastiques annulaires étant disposés dans lesdites gorges, l'étanchéité desdits joints étant assurée par le contact entre chaque joint et deux surfaces parallèles, les forces de pression étant axiales.

L'invention concerne également une pièce intermédiaire fixée sur la bague externe de roulement d'un palier à roulement pour le maintien d'une structure mobile interne à symétrie de révolution, en rotation à l'intérieur d'une structure externe, elle-même fixe ou mobile, ledit palier à roulement comprenant un ensemble de billes, ladite bague externe assurant le contact mécanique entre lesdites billes et ladite structure externe via ladite pièce intermédiaire, ledit palier à roulement comprenant en outre un amortisseur à huile sous pression appelé "squeeze film", disposé au niveau de la surface annulaire de contact entre ladite pièce intermédiaire et la structure externe ; caractérisée en ce qu'elle comporte au moins deux premiers épaulements annulaires qui coopèrent avec deux seconds épaulements annulaires usinés dans la pièce de structure, lors de la mise en contact des deux pièces pour former au moins deux gorges, disposées aux bords de la surface annulaire de contact entre la pièce intermédiaire et la pièce de structure, de manière asymétrique de part et d'autre de ladite surface, chaque gorge résultant de la mise en vis-à-vis d'un premier et d'un second épaulement, au moins deux joints d'étanchéité élastiques annulaires étant disposés dans lesdites gorges, l'étanchéité desdits joints étant assurée par le contact entre chaque joint et deux surfaces parallèles, les forces de pression étant axiales.

### Brève description des figures

La figure 1 représente une vue en coupe, selon un plan passant par l'axe de révolution, d'un palier à roulement muni d'un « squeeze film » selon l'état de la technique.

La figure 2 représente une vue en coupe, selon un plan passant par l'axe de révolution, d'un palier à roulement muni d'un « squeeze film » selon une forme d'exécution préférée de la présente invention.

La figure 3 représente une vue en coupe, selon un plan passant par l'axe de révolution, d'un palier à roulement muni d'un « squeeze film » selon une variante de cette forme d'exécution préférée de la présente invention.

### Description d'une forme d'exécution suivant l'état de la technique

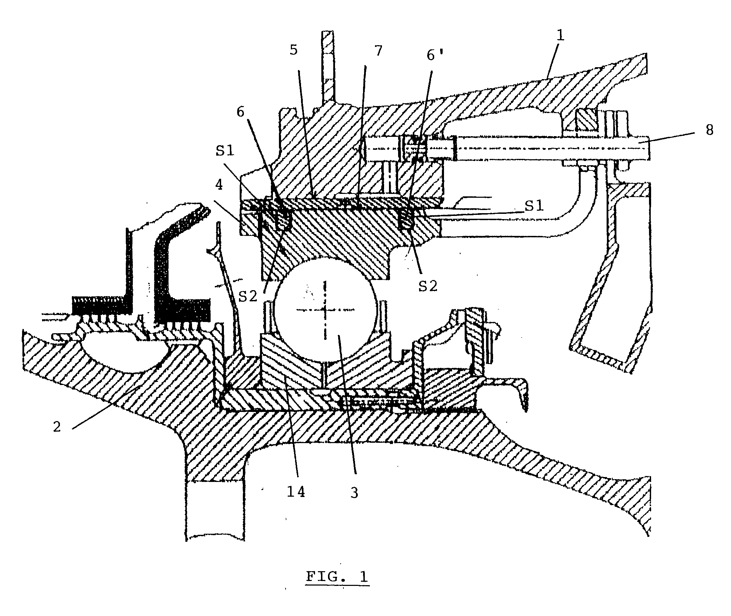

La figure 1 donne un exemple d'un palier à roulement utilisant un « squeeze film » selon l'état de la technique, dans le cas particulier d'un moteur aéronautique. Le palier assure le lien entre une structure fixe conique 1 disposée autour d'un élément mobile tournant 2, par exemple un arbre moteur dans ce cas-ci, au moyen d'un ou plusieurs roulements à billes 3. Le palier possède une symétrie de révolution autour de l'axe de l'arbre moteur. Le roulement est donc constitué d'un ensemble de billes 3 disposées de manière circulaire entre les deux bagues externe 4 et interne 14. Les billes 3 sont mises en contact avec la structure fixe 1 via la bague externe de roulement 4, la surface de contact 5 entre la bague externe 4 et la structure 1 étant annulaire. Deux gorges 6 et 6' sont usinées sur cette bague 4 aux extrémités de la surface de contact annulaire 5. Un joint circulaire de section essentiellement rectangulaire, de type segment de piston, est déposé dans chaque gorge. L'huile sous pression constituant le « squeeze film » est injectée au niveau de cette surface de contact 5, entre les deux gorges 6 et 6' au niveau d'un orifice 7 par une canalisation 8. La pression d'huile qui s'exerce sur le joint assure l'étanchéité par l'augmentation de la surface de contact entre le joint et deux surfaces perpendiculaires S1 et S2 des gorges, les forces de pression étant à la fois radiales et axiales.

Les joints d'étanchéité selon l'état de la technique doivent être dimensionnés sur mesure pour chaque application particulière. Ils nécessitent un ajustement mécanique et un montage très précis.

### Description d'une forme d'exécution préférée de l'invention

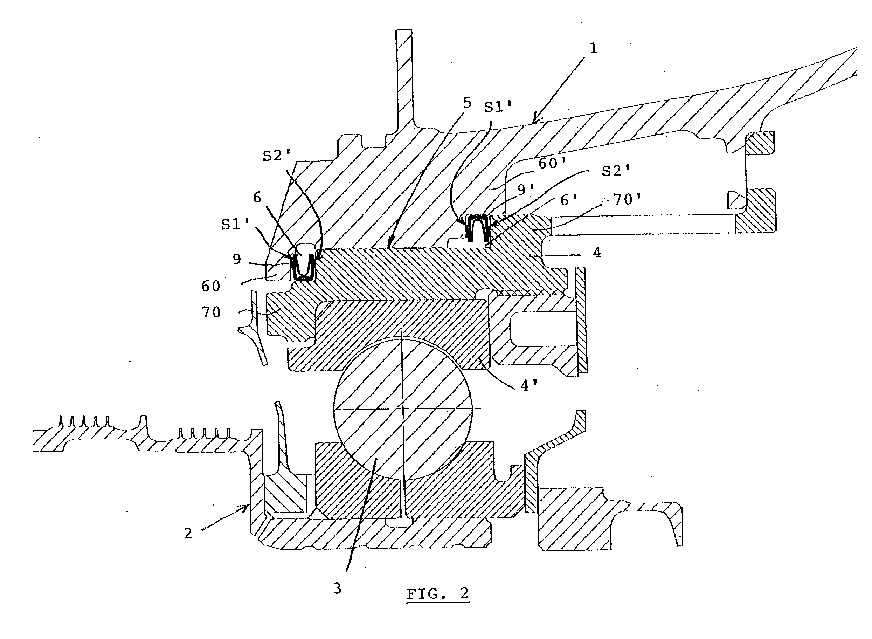

Selon une forme d'exécution de l'invention représentée à la figure 2, deux gorges sont aménagées de part et d'autre de la surface de contact 5 entre la bague de roulement 4 et la structure externe 1, et donc de part et d'autre du film d'huile. Ces gorges sont asymétriques par rapport à la surface occupée par le film d'huile. Contrairement à la description susmentionnée, ces deux gorges sont obtenues au départ d'un usinage de deux épaulements 60,60' dans la pièce de la structure externe 1 et de deux épaulements 70,70' dans la bague 4, et non plus uniquement dans la bague 4, et sont donc formées par contact coopératif des pièces 1,4.

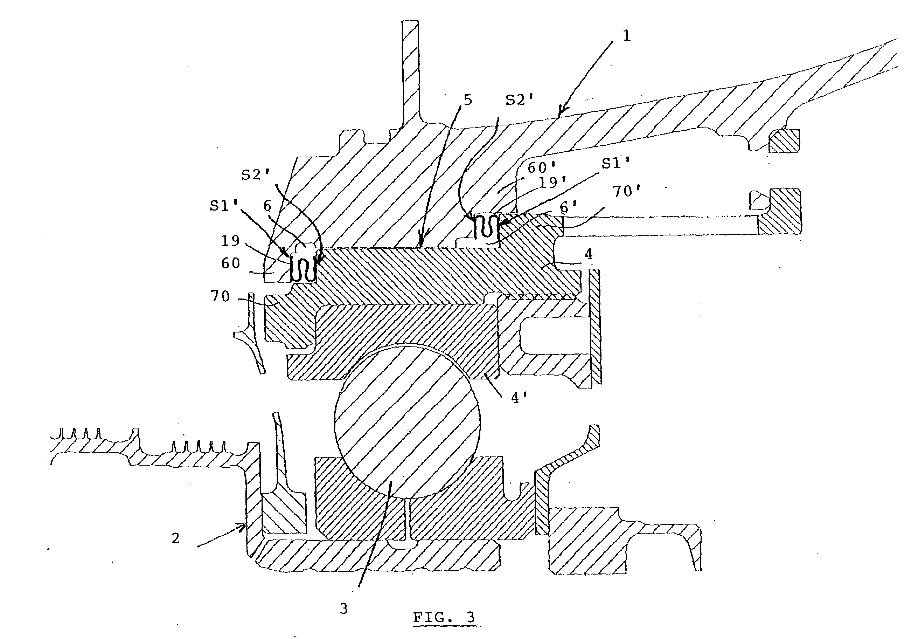

On dispose dans chaque gorge soit un joint à lèvres 9,9' (Figure 2), soit un joint métallique 19,19' de type E (Figure 3). Ces joints travaillent en frottement, la bague externe de roulement 4 pouvant se déplacer légèrement par rapport à la structure fixe en frottant sur le joint. Le frottement est généré par un déplacement relatif radial ou de précession de la pièce 4, qui est flottante, par rapport à la pièce fixe 1.

Le joint à lèvres 9,9' est un joint en élastomère, par exemple en polyimide, muni d'un ressort métallique, disposé à l'intérieur, qui écarte les lèvres.

Le joint métallique 19,19' de type E résiste avantageusement aux hautes températures.

Les lèvres des joints 9,9',19,19' sont dirigées vers la surface de contact 5. La pression d'huile provoque l'écartement du joint et assure l'étanchéité en augmentant la surface de contact entre le joint et les surfaces parallèles S1' et S2', les forces de pression étant axiales.

Vu la complexité d'usinage du dispositif selon l'invention, il peut être souhaitable, selon une forme d'exécution particulièrement préférée de l'invention, de recourir à une bague intermédiaire 4 assurant le contact mécanique entre la bague externe de roulement proprement dite 4' et la pièce de structure externe 1 (Figures 2 et 3). Il est ainsi possible de ne pas modifier le roulement d'origine, qui reste standard. Sur les figures 2 et 3, on peut alternativement considérer que la pièce 4 est la bague externe de roulement et la pièce 4' la voie externe de roulement proprement dite.

Le dispositif selon l'invention présente une grande facilité de montage. Le montage est avantageusement réalisé sans outillage par la simple dépose du roulement dans la structure appelée à le recevoir.

Le montage s'effectue comme suit :
- chaque joint d'étanchéité élastique et annulaire 9,9' (ou 19,19') est disposé sur la structure externe 1, au niveau des deux épaulements usinés dans celle-ci ;
- le roulement à billes 3, muni de sa bague externe 4 est ensuite enfilé dans la pièce de structure 1, chaque joint annulaire 9,9' (ou 19,19') prenant appui dans la gorge correspondante 6,6' formée par la mise en contact de la bague 4 avec la structure 1 ;
- chaque joint annulaire 9,9' (ou 19,19') est comprimé par des moyens de serrage appuyés sur ladite structure 1 et sur la bague externe du roulement 4.

## Revendications

1. Palier à roulement pour le maintien d'une structure mobile interne (2) à symétrie de révolution, en rotation à l'intérieur d'une structure externe (1), elle-même fixe ou mobile, ledit palier à roulement comprenant un ensemble de billes (3) et au moins une bague externe de roulement (4) assurant le contact mécanique entre lesdites billes (3) et ladite structure externe (1), ledit palier à roulement comprenant en outre un amortisseur à huile sous pression appelé "squeeze film", disposé au niveau de la surface annulaire de contact (5) entre ladite bague (4) et la structure externe (1), ledit palier à roulement comprenant au moins deux joints d'étanchéité élastiques annulaires (9,9',19,19'), disposés chacun dans une gorge (6,6'), aux bords de ladite surface annulaire (5), **caractérisé en ce que** l'étanchéité dudit joint (9,9',19,19') est assurée par le contact entre le joint et deux surfaces parallèles (S1',S2') de ladite gorge, les forces de pression du joint sur les surfaces des gorges étant axiales.

2. Palier à roulement selon la revendication 1, **caractérisé en ce que** les deux gorges (6,6') sont disposées de manière asymétrique de part et d'autre de ladite surface annulaire (5), une des surfaces de contact d'étanchéité (S1') avec ledit joint appartenant à la pièce de structure externe (1) et l'autre surface de contact d'étanchéité (S2') avec ledit joint appartenant à la bague (4).

3. Palier à roulement selon la revendication 1 ou 2, **caractérisé en ce que** la bague externe de roulement (4) présente un premier épaulement annulaire, la pièce de structure (1) présente un second épaulement annulaire, la mise en contact des deux pièces (1,4) assurant de manière coopérative la formation de la gorge (6,6') dans laquelle est disposé et comprimé le joint annulaire (9,9',19,19').

4. Palier à roulement selon l'une quelconque des revendications 1 à 3, **caractérisé en ce que** le joint d'étanchéité élastique et annulaire (9,9') est un joint à lèvres en forme de "U" dont le creux est dirigé vers le "squeeze film".

5. Palier à roulement selon la revendication 4, **caractérisé en ce que** le joint à lèvres en forme de "U" est un joint polymère, de préférence en polyimide, comportant un élément de ressort à l'intérieur du "U".

6. Palier à roulement selon l'une quelconque des revendications 1 à 3, **caractérisé en ce que** le joint d'étanchéité élastique et annulaire (19,19') est un joint métallique de type E dont les creux sont dirigés vers le "squeeze film".

7. Palier à roulement selon l'une quelconque des revendications 1 à 3, **caractérisé en ce qu'**il comprend au moins un joint à lèvres (9,9') et au moins un joint métallique de type E (19,19').

8. Palier à roulement selon l'une quelconque des revendications précédentes, **caractérisé en ce que** le diamètre extérieur d'un des deux joints annulaires (9,19) est plus petit ou égal au diamètre intérieur de l'autre joint annulaire (9',19').

9. Bague externe de roulement (4) d'un palier à roulement pour le maintien d'une structure mobile interne (2) à symétrie de révolution, en rotation à l'intérieur d'une structure externe (1), elle-même fixe ou mobile, ledit palier à roulement comprenant un ensemble de billes (3), ladite bague externe (4) assurant le contact mécanique entre lesdites billes (3) et ladite structure externe (1), ledit palier à roulement comprenant en outre un amortisseur à huile sous pression appelé "squeeze film", disposé au niveau de la surface annulaire de contact (5) entre ladite bague (4) et la structure externe (1) ; **caractérisée en ce qu'**elle comporte au moins deux premiers épaulements annulaires qui coopèrent avec deux seconds épaulements annulaires usinés dans la pièce de structure (1), lors de la mise en contact des deux pièces (1,4), pour former au moins deux gorges (6,6'), disposées aux bords de la surface annulaire de contact (5) entre la bague (4) et la pièce de structure (1), de manière asymétrique de part et d'autre de ladite surface (5), chaque gorge résultant de la mise en vis-à-vis d'un premier et d'un second épaulement, au moins deux joints d'étanchéité élastiques annulaires (9,9',19,19') étant disposés dans lesdites gorges (6,6'), l'étanchéité desdits joints (9,9',19,19') étant assurée par le contact entre chaque joint et deux surfaces parallèles (S1',S2'), les forces de pression étant axiales.

10. Pièce intermédiaire (4) fixée sur la bague externe de roulement (4') d'un palier à roulement pour le maintien d'une structure mobile interne (2) à symétrie de révolution, en rotation à l'intérieur d'une structure externe (1), elle-même fixe ou mobile, ledit palier à roulement comprenant un ensemble de billes (3), ladite bague externe (4') assurant le contact mécanique entre lesdites billes (3) et ladite structure externe (1) via ladite pièce intermédiaire (4), ledit palier à roulement comprenant en outre un amortisseur à huile sous pression appelé "squeeze film", disposé au niveau de la surface annulaire de contact (5) entre ladite pièce intermédiaire (4) et la structure externe (1) ; **caractérisée en ce qu'**elle comporte au moins deux premiers épaulements annulaires qui coopèrent avec deux seconds épaulements annulaires usinés dans la pièce de structure (1), lors de la mise en contact des deux pièces (1,4) pour former au moins deux gorges (6, 6'), disposées aux bords de la surface annulaire de contact (5) entre la pièce intermédiaire (4) et la pièce de structure (1), de manière asymétrique de part et d'autre de ladite surface, chaque gorge résultant de la mise en vis-à-vis d'un premier et d'un second épaulement, au moins deux joints d'étanchéité élastiques annulaires (9,9',19,19') étant disposés dans lesdites gorges (6,6'), l'étanchéité desdits joints (9,9',19,19') étant assurée par le contact entre chaque joint et deux surfaces parallèles (S1',S2'), les forces de pression étant axiales.
